# EUROPÄISCHE PATENTANMELDUNG

(11) **EP 1 834 821 A2**
(43) Veröffentlichungstag der Anmeldung: **19.09.2007**
(21) Anmeldenummer: 07005205.5
(22) Anmeldetag: 13.03.2007
(51) Int. Cl.: B60J 7/10

(54) **Befestigungsvorrichtung und Nutzfahrzeuge bzw. Nutzfahrzeuganhänger mit einer derartigen Befestigungsvorrichtung**

(30) Priorität: 13.03.2006 DE 202006003932 U
(71) Anmelder: Kaiser, Ria, Dipl.-Ing., 21107 Hamburg (DE); Lange, Hans Juergen, 21107 Hamburg (DE)
(72) Erfinder: Kaiser, Ria, Dipl.-Ing., 21107 Hamburg (DE); Lange, Hans Juergen, 21107 Hamburg (DE)
(74) Vertreter: Grünecker, Kinkeldey, Stockmair & Schwanhäusser Anwaltssozietät

(57) **Zusammenfassung**

Die Erfindung betrifft eine Befestigungsvorrichtung (10) für die Plane (11), insbesondere die Schiebeplane eines Nutzfahrzeugs bzw. eines Nutzfahrzeuganhängers (12), mit einer Einrichtung (13) zum Verbinden einer Unterkante (14) der Plane mit dem Nutzfahrzeug bzw. dem Nutzfahrzeuganhänger. Um die Plane mit vergleichsweise geringem Aufwand zu montieren und im Betrieb leicht und schnell handhaben zu können, wird erfindungsgemäß vorgeschlagen, dass die Verbindungseinrichtung ein Mittel (15) zum Festklemmen der Unterkante der Plane am Nutzfahrzeug bzw. am Nutzfahrzeuganhänger umfasst.

## Beschreibung

Die Erfindung betrifft eine Befestigungsvorrichtung für die Plane, insbesondere die Schiebeplane eines Nutzfahrzeugs bzw. eines Nutzfahrzeuganhängers gemäß dem Oberbegriff des Anspruchs 1.

Zur Sicherung der Plane ist bei bekannten Nutzfahrzeugen bzw. Nutzfahrzeuganhängern eine Vielzahl von Gurten entlang der Unterkante der Plane in bestimmten Abständen vorgesehen, die mit entsprechenden Ösen am Aufbau des Nutzfahrzeuge bzw. Nutzfahrzeuganhängers verzurrt werden. Anstelle der Gurte können auch so genannte Direktspanner verwendet werden, die oberhalb der Unterkante von außen auf die Plane durch einen horizontalen und vertikalen PVC-Schweißgurt mit Schraub- oder Nietverbindungen montiert wenden.

Derartige Spann- oder Zurrsysteme haben den Nachteil, dass die Montage der einzelnen Spanner bzw. Gurte aufgrund der für eine ausreichende Sicherheit erforderlichen Anzahl der Gurte bzw. Spanner aufwendig ist. Das selbe gilt für die Befestigung der Plane mittels derartiger Spann- bzw. Zurrsysteme, die sehr zeitintensiv ist, da eine Vielzahl von Gurten bzw. Spannern betätigt werden müssen, um die Plane zu sichern.

Der Erfindung liegt daher die Aufgabe zugrunde, eine Befestigungsvorrichtung für die Plane, insbesondere für die Schiebeplane eines Nutzfahrzeugs bzw. eines Nutzfahrzeuganhängers anzugeben, die mit vergleichsweise geringem Aufwand zu montieren und im Betrieb leicht und schnell zu handhaben ist. Ferner soll ein Nutzfahrzeug bzw. ein Nutzfahrzeuganhänger mit einer derartigen Befestigungsvorrichtung angegeben werden.

Erfindungsgemäß wird diese Aufgabe im Hinblick auf die Befestigungsvorrichtung durch den Gegenstand des Anspruchs 1 und im Hinblick auf das Nutzfahrzeug bzw. den Nutzfahrzeuganhänger jeweils durch die Gegenstände der Ansprüche 16 bzw. 17 gelöst.

Der Erfindung liegt der Gedanke zugrunde, eine Befestigungsvorrichtung für die Plane, insbesondere für die Schiebeplane eines Nutzfahrzeugs bzw. eines Nutzfahrzeuganhängers anzugeben, die eine Einrichtung zum Verbinden einer Unterkante der Plane mit dem Nutzfahrzeug bzw. dem Nutzfahrzeuganhänger aufweist, wobei diese Verbindungseinrichtung ein Mittel zum Festklemmen der Unterkante der Plane am Nutzfahrzeug bzw. am Nutzfahrzeuganhänger umfasst. Diese Art der Befestigung bietet die Vorraussetzung dafür, dass die Plane nicht punktuell an mehreren einzelnen Stellen mittels Gurten bzw. Spannern mit dem Aufbau des Nutzfahrzeuges bzw. Nutzfahrzeuganhängers verbunden wird, sondern zumindest abschnittsweise über eine bestimmte Länge der Unterkante der Plane am Nutzfahrzeug bzw. Nutzfahrzeuganhänger durchgehend festgeklemmt wird. Die Klemmlänge kann sich dabei auf die gesamte Längserstreckung der Plane, aber auch auf Teilabschnitte beziehen. In jedem Fall bietet das erfindungsgemäße Klemmkonzept die Vorraussetzung für eine zumindest abschnittsweise linienförmige Befestigung der Plane im Gegensatz zu der bekannten Mehrfach-Punktbefestigung.

Auf diese Weise wird die Anzahl der Handgriffe reduziert, die erforderlich ist, um die Plane am Fahrzeug bzw. Anhänger zu befestigen. Durch diese Vereinfachung der Handhabung der Plane wird eine maßgebliche Zeitersparnis erreicht. Außerdem wird aufgrund der geringen Anzahl von Bauteilen, die für die Realisierung des Klemmmittels erforderlich sind, die Montage des selben vereinfacht.

Die erfindungsgemäße Befestigungsvorrichtung wird besonders vorteilhaft bei Schiebeplanen eingesetzt.

Bevorzugte Ausführungsformen und konstruktive Details der Erfindung sind in den Unteransprüchen angegeben.

Vorzugsweise umfasst das Klemmmittel eine beweglich gelagerte, in eine Offenstellung und eine Befestigungsstellung verstellbare Kante, die parallel zur Unterkante der Plane angeordnet ist und diese in der Befestigungsstellung festklemmt. Die Kante kann in ihrer Längserstreckung durchgehend oder auch unterteilt ausgebildet sein. In jedem Fall ermöglicht die Verstellbarkeit der Kante ein einfaches Fixieren der Planenunterkante in der Befestigungsstellung.

Ferner kann das Klemmmittel eine weitere, insbesondere eine ortsfeste Kante aufweisen, die parallel zur Unterkante der Plane angeordnet ist, wobei die beiden Kanten zum Festklemmen der Unterkante der Plane relativ zueinander verstellbar sind. Durch die Gegeneinanderbewegung der beiden Kanten wird die dazwischen angeordnete Plane festgeklemmt. Dabei können entweder beide Kanten beweglich oder eine Kante beweglich und die andere Kante ortsfest angeordnet sein.

In einer besonders bevorzugten Ausführungsform umfasst das Klemmmittel ein in Längsrichtung geschlitztes Rohr und eine dem Rohr zugeordnete Kante am Nutzfahrzeug bzw. Nutzfahrzeuganhänger, wobei das Rohr und die Kante relativ zueinander dreh- bzw. schwenkverstellbar angeordnet sind. Vorzugsweise ist dabei das Rohr drehverstellbar gelagert, so dass dieses gegenüber der vorzugsweise ortsfesten Kante verdreht werden kann. Durch die Drehung des geschlitzten Rohres wird der Rohrschlitz bzw. die den Rohrschlitz bildende Kante gegenüber der Kante am Nutzfahrzeug bzw. Nutzfahrzeuganhänger parallel verdreht, so dass die zwischen dem Rohrschlitz und der Kante am Nutzfahrzeug bzw. Nutzfahrzeuganhänger angeordnete Plane eingeklemmt wird. Die Verwendung des geschlitzten Rohres bietet eine besonders einfache Möglichkeit, eine Längsklemmung der Plane über eine bestimmte Länge, d. h. eine linienförmige Klemmung der Plane zu realisieren. Außerdem ist die Verwendung eines derartigen geschlitzten Rohres erheblich billiger, als der Einsatz einer Vielzahl von Spannern bzw. Gurten.

Dabei kann das Rohr drehbeweglich in einer Ausnehmung angeordnet sein, die in einem Rahmen des Nutzfahrzeuges bzw. Nutzfahrzeuganhängers ausgebildet ist und sich parallel zur Unterkante der Plane erstreckt, wobei die Ausnehmung die dem Rohr zugeordnete Kante aufweist, gegen die das Rohr verdrehbar ist. Die drehbewegliche Anordnung des Rohres in einer Ausnehmung ist insbesondere unter aerodynamischen Gesichtpunkten günstig, da das Rohr nicht über die Außenkontur des Fahrzeuges bzw. Anhängers vorsteht.

Die Ausnehmung kann einen Lagerbereich zur drehbeweglichen Aufnahme des Rohres aufweisen sowie eine mit dem Lagerbereich verbundene Öffnung, an der die Kante ausgebildet ist, gegen die das Rohr verdrehbar ist. Damit erfüllt die Ausnehmung zwei Funktionen, nämlich die drehbewegliche Lagerung des Rohres, sowie die Anordnung der Kante, gegen die das Rohr zum Festklemmen der Plane verdreht wird. Die Öffnung bildet dabei einen entlang des Fahrzeugs bzw. des Anhängers sich erstreckenden Schlitz, in den die Unterkante der Plane zum Befestigen eingelegt wird. Dabei ist der Rohrschlitz in der Offenstellung der Öffnung der Ausnehmung zugewandt, so dass die Unterkante in das geschlitzte Rohr eingelegt werden kann. Das geschlitzte Rohr hat somit den Vorteil, dass die Plane nicht eingefädelt werden muss, sondern einfach in den Schlitz eingelegt wird, was besonders bei Schiebeplanen vorteilhaft ist. Zum Fixieren der Plane wird das Rohr dann im Lagerbereich verdreht, so dass die Plane zwischen der in Längsrichtung sich erstreckenden Rohrkante und der an der Öffnung der Ausnehmung vorgesehenen Kante eingeklemmt wird. Das bedeutet, dass das Rohr nur Befestigungs- bzw. Haltefunktion übernimmt. Das Spannen der Plane erfolgt durch eine separate Einrichtung.

Bei einer bevorzugten Ausführungsform ist das Rohr in der Ausnehmung, insbesondere im Lagerbereich der Ausnehmung radial beweglich gelagert und in eine Offenstellung und eine Befestigungsstellung bewegbar. In der Befestigungsstellung wird das Rohr arretiert. Auf diese Weise kann die Unterkante der Plane leicht in das geschlitzte Rohr eingelegt werden, wenn dieses sich in der Offenstellung befindet, wobei gleichzeitig eine sichere Fixierung der Plane durch Arretieren des Rohres erreicht wird, wenn sich dieses in der Befestigungsstellung befindet.

Bei diesem Ausführungsbeispiel kann der Lagerbereich eine erste, dem Umfangsprofil des Rohres teilweise angepasste Wölbung und eine zweite, dem Umfangsprofil des Rohres teilweise angepasste Wölbung aufweisen, wobei die Wölbungen voneinander beabstandet sind derart, dass das Rohr zum Arretieren von der ersten in die zweite Wölbung bewegbar ist. Das bedeutet, dass eine der beiden Wölbungen für die drehbewegliche Lagerung des Rohres vorgesehen ist, durch die die Plane zwischen dem Rohrschlitz und der an der Ausnehmung vorgesehenen Kante eingeklemmt wird. Die andere der beiden Wölbungen ist für die Arretierung des Rohres vorgesehen, das, in der Befestigungsstellung, d. h. in der gegenüber der ortsfesten Kante verdrehten Stellung in die zweite Wölbung bewegt und dort durch eine Flächenpressung fixiert wird. Aufgrund der dem Umfangsprofil des Rohres teilweise angepassten Kontur der beiden Wölbungen ist sowohl die drehbewegliche Lagerung des Rohres als auch dessen Arretierung durch Flächenpressung gegeben.

Alternativ zu diesem Ausführungsbeispiel kann das Rohr auch in der Ausnehmung, insbesondere im Lagerbereich radial gelagert sein. Dies bedeutet, dass det Lagerbereich die beim Festklemmen auftretenden Radialkräfte aufnimmt und somit sowohl die drehbewegliche Anordnung des Rohres als auch die Fixierung des Rohres in der Befestigungsstellung ermöglicht.

Bei einer besonders bevorzugten Ausführungsform ist eine Einrichtung zum Arretieren des Klemmmittels in der Befestigungsstellung vorgesehen, wobei die Arretiereinrichtung ein Mittel zum Spannen der Unterkante der Plane umfasst, das die Unterkante der Plane in der Befestigungsstellung mit einer Spannkraft beaufschlagt, die eine Komponente senkrecht zur Unterkante der Plane aufweist.

Durch die Arretiereinrichtung wird sicher gewährleistet, dass ein versehentliches Lösen der Plane vermieden wird.

Das Spannmittel umfasst vorzugsweise eine im Wesentlichen senkrecht angeordnete Drehwelle, wobei das eine Ende der Unterkante der Plane an der Drehwelle und das andere Ende ortsfest am Nutzfahrzeug bzw. Nutzfahrzeuganhänger befestigbar ist derart, dass wenigstens ein Ende, insbesondere beide Enden der Unterkante nicht koaxial mit dem horizontal verlaufenden Abschnitt der Unterkante der Plane angeordnet sind. Anstelle der Drehwelle können auch andere Mittel verwendet werden, um die erforderliche Spannkraft aufzubringen, sofern gewährleistet ist, dass ein Ende, insbesondere beide Enden der Unterkante nicht koaxial mit dem horizontal verlaufenden Abschnitt der Unterkante der Plane angeordnet sind. Dies bedeutet, dass die Endabschnitte der Unterkante schräg bezogen auf die Horizontale verlaufen, so dass eine horizontale und eine vertikale Spannkraftkomponente erzeugt wird, wenn die Unterkante mit einer Spannkraft beaufschlagt wird. Die vertikal wirkende Spannkraftkomponente dient zur Arretierung des Klemmmittels.

Die Drehwelle kann eine spiralförmige Nut aufweisen zum Aufwickeln der Unterkante der Plane bzw. eines die Unterkante bildenden Spannseils. Die spiralförmige Nut bewirkt eine Verteilung der Unterkante bzw. des Spannseils entlang der Drehwelle.

Bei einer anderen Ausführungsform weist das Klemmmittel mehrere fahnenartige Fortsätze auf, die beweglich, insbesondere schwenkbeweglich, angeordnet sind und in der Befestigungsstellung in passende Öffnungen in der Plane eingreifen, die bodenseitig von der Unterkante der Plane begrenzt sind. Auch bei dieser Ausführungsform wird eine Klemmung der Plane, insbesondere der Unterkante der Plane, erreicht und zwar dadurch, dass die fahnenartigen Fortsätze in die Planenöffnungen eingreifen und die bodenseitig durchgehend vorgesehene Unterkante der Plane übergreifen. Durch eine geeignete Bewegung der fahnenartigen Fortsätze, insbesondere durch eine Schwenkbewegung wird die Unterkante der Plane unter den Fortsätzen eingeklemmt und dadurch befestigt.

Die Haltbarkeit der Plane wird dadurch verbessert, dass die Unterkante verstärkt ist. Dies kann beispielsweise dadurch erfolgen, dass die Unterkante mit einem Seil, insbesondere mit einem thermisch dimensionsstabilen Stahlseil verbunden ist.

Die Erfindung wird nachfolgend anhand von Ausführungsbeispielen unter Bezug auf die beigefügten schematischen Figuren näher erläutert. In diesen zeigen
- Fig. 1: eine Seitenansicht eines Nutzfahrzeuganhängers mit einer Befestigungsvorrichtung nach einem erfindungsgemäßen Ausführungsbeispiel;
- Fig. 2: einen Querschnitt durch die Befestigungsvorrichtung nach einem ersten erfindungsgemäßen Ausführungsbeispiel;
- Fig. 3: die Befestigungsvorrichtung gemäß Fig. 2 in perspektivischer Ansicht;
- Fig. 4: die Befestigungsvorrichtung gemäß Fig. 2 in perspektivischer Ansicht mit weiteren Anbauteilen;
- Fig. 5: einen Querschnitt durch eine Befestigungsvorrichtung nach einem zweiten erfindungsgemäßen Ausführungsbeispieles in Offenstellung;
- Fig. 6: die Befestigungsvorrichtung gemäß Fig. 5 in Befestigungsstellung;
- Fig. 7: eine Seitenansicht einer Arretiereinrichtung der erfindungsgemäßen Befestigungsvorrichtung;
- Fig. 8: eine Seitenansicht eines weiteren Teils der Arretiervorrichtung gemäß Fig. 7; und
- Fig. 9: eine Draufsicht auf eine Befestigungsvorrichtung nach einem dritten erfindungsgemäßen Ausführungsbeispiel.

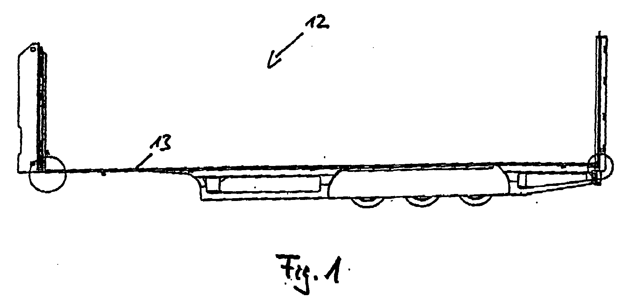

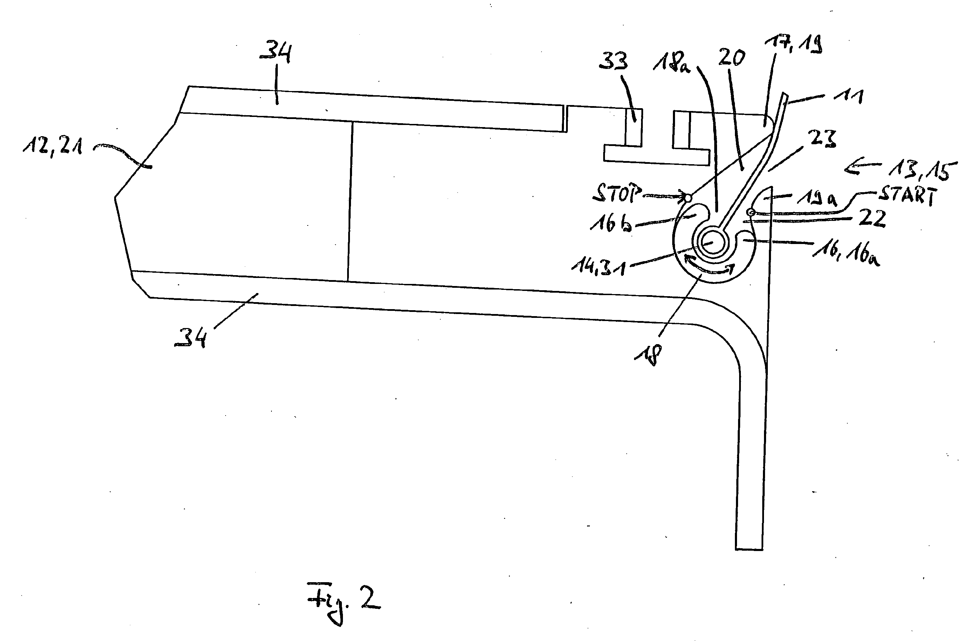

Fig. 2 zeigt ein Ausführungsbeispiel einer erfindungsgemäßen Befestigungsvorrichtung, wie sie bei Nutzfahrzeugen, insbesondere Lastkraftwagen, und Nutzfahrzeuganhängern, insbesondere Sattelaufliegern, zum Einsatz kommt. Die Befestigungsvorrichtung ist generell für alle Fahrzeuge geeignet, bei denen eine Plane mit dem Fahrzeug verbunden wird. Die Befestigungsvorrichtung kann besonders vorteilhaft bei Fahrzeugen bzw. Anhängern eingesetzt werden, die Schiebeplanen aufweisen.

Ein Beispiel für einen Sattelauflieger mit einer derartigen Schiebeplane ist in Fig. 1 dargestellt. Die Befestigungsvorrichtung dieses Nutzfahrzeuganhängers 12 weist eine Einrichtung 13 zum Verbinden einer Unterkante 14 der Plane 11 mit dem Nutzfahrzeuganhänger 12 auf.

Die Verbindungseinrichtung 13 ist im Detail in Fig. 2 veranschaulicht. Dort ist zu erkennen, dass die Verbindungseinrichtung 13 ein Mittel 15 zum Festklemmen der Unterkante 14 der Plane 11 am Nutzfahrzeuganhänger 12 umfasst. Die Unterkante 14 ist durch ein thermisch dimensionsstabiles Stahlseil 31 verstärkt, das auf beiden Seiten der Plane 11 vorsteht. Prinzipiell funktioniert die Klemmwirkung auch ohne das Stahlseil 31, das in der Praxis jedoch die Haltbarkeit der Plane 11 und deren Handhabung beim Einfädeln bzw. Einlegen der Unterkante 14 in das Klemmmittel 15 beträchtlich verbessert. Das Klemmmittel 15 weist ein geschlitztes Rohr 18 auf, das am bzw. im Rahmen 21 des Anhängers 12 drehbeweglich gelagert ist. Das Rohr 18 erstreckt sich über die gesamte Länge des Anhängers 12.

Wie ferner in Fig. 2 zu erkennen, ist das Rohr 18 geschlitzt, d. h. das Rohr 18 weist einen Längsschlitz 18a auf, der sich ebenfalls über die gesamte Länge des Anhängers 12 erstreckt. Das Rohr 18 ist aus einem verwindungssteifen Material, beispielsweise aus Stahl hergestellt und weist eine ausreichend große Wandstärke auf, um ein im Wesentlichen verwindungsfreies Drehen des Rohres 18 zu ermöglichen.

Das Rohr 18 ist in einer Ausnehmung 20 drehbeweglich angeordnet, die im Rahmen 21 des Nutzfahrzeuganhängers 12 ausgebildet ist. Die Ausnehmung 20 erstreckt sich parallel zur Unterkante 14 der Plane 11 über die gesamte Länge des Anhängers 12.

Die Ausnehmung 20 weist einen Lagerbereich 22 auf, dessen Querschnittsprofil einem Teilumfang des geschlitzten Rohres 18 entspricht. Das Rohr 18 ist in dem Lagerbereich 22 gleitbeweglich und radial gelagert aufgenommen. Die Ausnehmung 20 weist ferner eine Öffnung 23 auf, die mit dem Lagerbereich 22 verbunden ist. Die Öffnung 23 bildet dabei einen sich über die gesamte Länge des Anhängers 12 erstreckenden Schlitz bzw. Nut, wobei der Nutgrund zur Bildung des Lagerbereichs 22 mit der vorstehend erläuterten Kontur erweitert ist.

Die in Fig. 2 dargestellte obere Begrenzung der Öffnung 23 bildet eine Kante 17, 19, gegenüber der das Rohr 18, insbesondere der Rohrschlitz 18a verdrehbar ist. Das zur Verdrehung des Rohres 18 erforderliche Drehmoment kann beispielsweise durch einen nicht dargestellten Knebel oder eine andere Hebelanordnung, die an einem Ende des Rohres 18 angreift, realisiert werden.

Zum Befestigen der Plane am Rahmen 21 des Anhängers 12 wird das Rohr 18 so gedreht, dass der Rohrschlitz 18a zur Öffnung 23 der Ausnehmung 20 weist. Diese Offenstellung der Befestigungsvorrichtung 10 ist in Fig. 2 dargestellt.

Der Rohrschlitz 18a und die Öffnung 23 sind also in der Offenstellung fluchtend angeordnet. Die Unterkante 14 der Plane 11 kann in der Offenstellung somit über die Öffnung 23 und den Rohrschlitz 18a in das Rohr 18 eingelegt werden, wie in Fig. 2 dargestellt. Dies kann bei einer Schiebeplane auf einfache Weise dadurch erfolgen, dass der Anfang der Unterkante 14 bei geöffneter Plane 11 in das geschlitzte Rohr 18 eingelegt wird und sodann, wie in einer Schiene in der Ausnehmung 20 bzw. im geschlitzten Rohr 18 bis zum Ende des Anhängers 12 gezogen wird. Damit, wird gleichzeitig mit dem Zuziehen der Schiebeplane die Unterkante 14 in das geschlitzte Rohr 18 eingelegt.

Wenn die Unterkante 14 der Plane 11 vollständig in das Rohr 18 eingelegt ist, wird das Rohr 18 mittels des Knebels verdreht und zwar so, dass die in der Offenstellung außen angeordnete Rohrkante 16a zum Inneren des Anhängers hin bewegt wird. In Fig. 2 entspricht diese Bewegung einer Bewegung im Gegenuhrzeigersinn. Die Rohraußenkante 16a wird also von dem in Fig. 2 mit Start bezeichneten Punkt zu dem mit Stopp bezeichneten Punkt verstellt.

Durch die Drehbewegung des Rohres 18 wird die in das Rohr 18 eingelegte Plane 11 von der Rohraußenkante 16a mitgenommen und zum Inneren des Anhängers 12 hin bewegt. Durch diese Bewegung wird die Plane 11 zwischen der Rohraußenkante 16a und der Kante 19 an der Öffnung 23 der Aufnehmung 20 festgeklemmt, so dass die Plane 11 am Rahmen 21 des Nutzfahrzeuganhängers 12 befestigt ist.

Es wäre auch möglich, das Rohr bei dem in Fig. 2 dargestellten Ausführungsbeispiel im Uhrzeigersinn zu drehen, so dass die Plane 11 zwischen der Rohrinnenkante 16b und der die Öffnung 23 nach unten hin begrenzenden Kante 19a eingeklemmt wird.

Mit dem in Fig. 2 dargestellten Ausführungsbeispiel wird das erfindungsgemäße Prinzip verwirklicht, die Unterkante 14 der Plane 11 am Nutzfährzeuganhänger 12 festzuklemmen. Dabei bietet die Klemmbefestigung der Plane 11 die Voraussetzung dafür, dass eine abschnittsweise, d. h. eine über eine längeren Abschnitt linienförmige Klemmung der Plane 11, im Gegensatz zur bekannten Punktbefestigung, ermöglicht wird. Dabei ist nicht erforderlich, dass die Klemmung der Plane 11 über die gesamte Länge des Anhängers 12 bzw. des Nutzfahrzeugs erfolgt. Vielmehr ist auch eine Klemmung von Teilabschnitten der Plane möglich, sofern insgesamt eine sichere Befestigung der Plane 11 am Anhänger 12 gewährleistet ist.

Das erfindungsgemäße Ausführungsbeispiel ermöglicht somit ein linienförmiges Festklemmen der Plane 11.

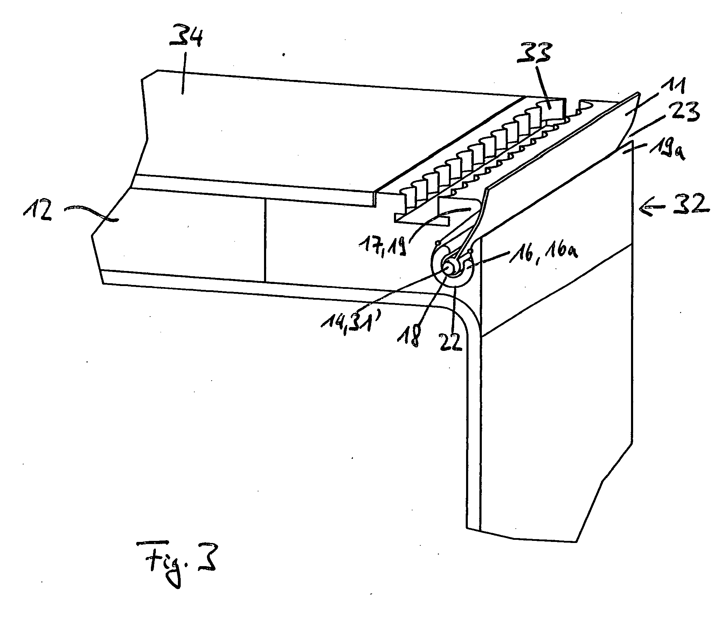

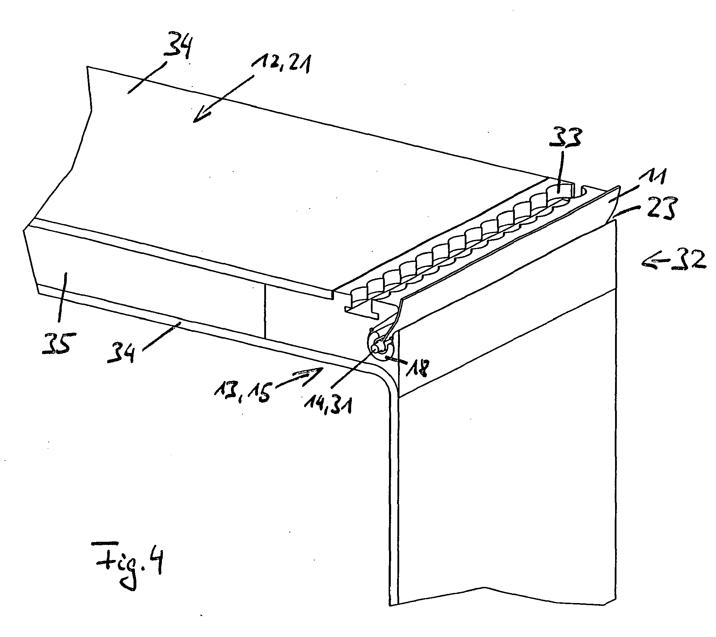

Wie in den Figuren 2, 3 und 4 erkennbar, ist die Ausnehmung 20 in einem Seitenteil 32 des Rahmens 21 ausgebildet, in dem auch eine Multifunktionsschiene zur Aufnahme der Rungen des Anhängers bzw. der Palettenanschläge vorgesehen ist. Die Multifunktionsschiene trägt das Bezugszeichen 33.

Das Seitenteil 32 kann zwischen die Bodenplatten 34 des Chassisboden geklebt oder anderweitig befestigt sein (genietet, geschraubt). Die Dicke des Seitenteils 32 entspricht dabei der Dicke der zwischen den Bodenplatten 34 angeordneten Waben 35 des Rahmens 21.

Bei dem Rahmen 21 handelt es sich um ein CFK-Monocoque, also um ein aus einem Kohlenstoff-Faser-Verbundwerkstoff hergestelltes Fahrgestell. Dieses Leichtgewicht-Fahrgestell wird von der Anmelderin konzipiert und ist in der EP 1 609 704 A2, die auf die Anmelderin zurückgeht, beschrieben. Der Inhalt der EP 1 609 704 A2 wird durch Bezugnahme in diese Anmeldung aufgenommen.

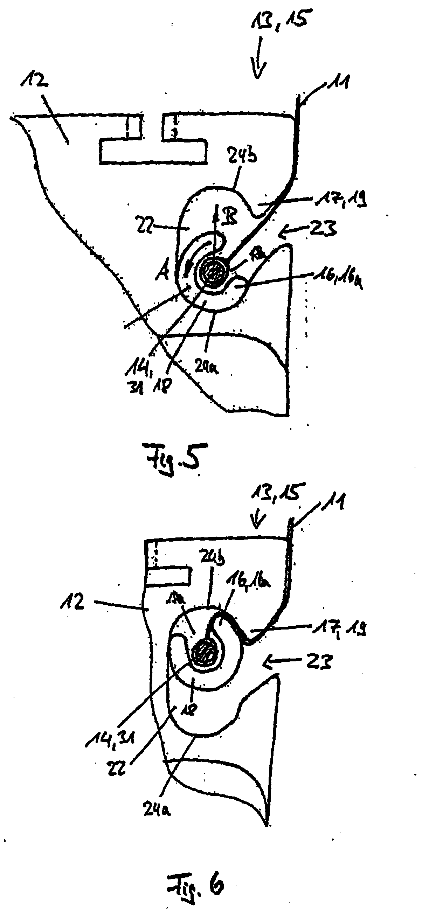

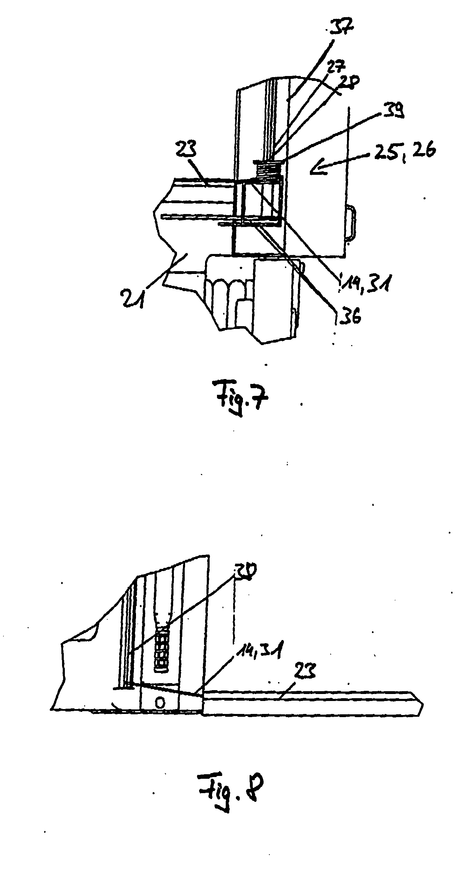

Bei dem zweiten Ausführungsbeispiel gemäß Fig. 6 ist das Rohr 18, im Unterschied zum Ausführungsbeispiel gemäß Fig. 2, in der Ausnehmung 20 radial beweglich gelagert. Dabei ist das Rohr 18 in der Befestigungsstellung arretierbar. Die Ausnehmung 20 weist einen Lagerbereich 22 sowie eine Öffnung 23 auf, durch die der Lagerbereich 22 zugänglich ist. Der Lagerbereich 22 umfasst eine erste Wölbung 24a, die dem Umfangsprofil des Rohres 18 teilweise angepasst ist. Der Lagerbereich 22 weist ferner eine zweite Wölbung 24b auf, die ebenfalls dem Umfangsprofil des Rohres 18 teilweise angepasst ist. Wie in den Figuren 5, 6 ersichtlich, sind die beiden Wölbungen 24a, 24b voneinander beabstandet, so dass das Querschnittsprofil des Lagerbereiches 22 im Wesentlichen C-förmig ausgebildet ist. Die die Öffnung 23 nach oben begrenzende Kante 19 wirkt dabei mit der Rohraußenkante 16a des geschlitzten Rohres 18 zum Festklemmen der Plane 11 zusammen.

Dazu wird die Plane 11 in den Rohrschlitz 18a in der beschriebenen Weise eingelegt, der in der in Fig. 5 dargestellten Offenstellung mit der Öffnung 23 fluchtet. In der Offenstellung ist das Rohr 18 in der ersten Wölbung 24a, d. h. in der unteren Wölbung 24a angeordnet. Zum Befestigen der Plane 11 wird das Rohr 18 in der mit dem Pfeil A bezeichneten Drehrichtung verdreht, und zwar so weit, bis die Rohraußenkante 16a und die ortsfeste Kante 19 gegeneinander so verstellt sind, dass die Plane zwischen der Rohraußenkante 16a und der ortsfesten Kante 19 eingeklemmt ist. Sodann wird eine in Pfeilrichtung B vertikal nach oben wirkende Arretier- bzw. Spannkraft auf die Unterkante 14 der Plane 11 ausgeübt, durch die die Unterkante 14 zusammen mit dem Rohr 18 nach oben in die zweite Wölbung 24b, d. h. in die obere Wölbung 24b bewegt wird. Da die zweite Wölbung 24b dem Umfangsprofils des Rohres zumindest teilweise angepasst ist, liegt das Rohr 18a bzw. die zwischen dem Rohr 18 und der Wölbung 24b eingeklemmte Plane 11 flächig an der Wölbung 24b an. Durch die weiterhin vertikal nach oben wirkende Arretier- bzw. Spannkraft wird das Rohr 18 gegen die obere Wölbung 24b gepresst, so dies das Klemmmittel 15 arretiert wird.

Die Darstellung gemäß Fig. 6 ist insofern schematisch zu verstehen, als die Rohraußenkante 16a in der Praxis so weit nach innen gedreht ist, dass der Rohrschlitz 18a seitlich angeordnet ist und die Unterkante 14 der Plane 11 vertikal nach oben gegen den darüber angeordneten Rohrschenkel drückt.

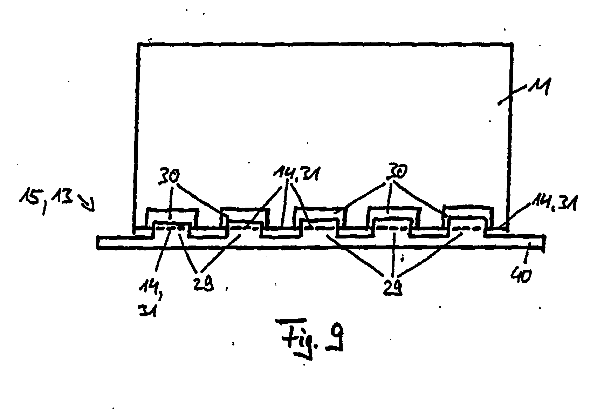

Die Einrichtung 25, mit deren Hilfe das Klemmmittel 15 arretiert wird, ist in den Figuren 7 und 8 dargestellt.

Diese Arretiereinrichtung 25 umfasst ein Mittel 26 zum Spannen der Unterkante 14 der Plane 11, wobei das Spannmittel 26 so ausgebildet ist, dass die Unterkante 14 der Plane 11 in der Befestigungsstellung mit einer Spannkraft beaufschlagt wird, die eine Komponente senkrecht zur Unterkante 14 der Plane 11 aufweist. Diese Spannkraft- bzw. Arretierkraftkomponente ist in Fig. 5 mit dem Pfeil B verdeutlicht.

Das Spannmittel 26 umfasst eine im Wesentliche senkrecht angeordnete Drehwelle 27, an der ein Wickelaufsatz 39 zur Aufnahme des Spannseils 31 vorgesehen ist. Die Drehwelle 27 ist mit einem Ratschengetriebe 36 verbunden, das am Rahmen 21 angeflanscht ist. Zur Erzeugung der vertikal nach oben gerichteten Spannkraftkomponente B ist die Drehwelle 27 bzw. der an der Drehwelle 27 vorgesehene Wickelaufsatz 39 so angeordnet, dass das Ende des Spannseils 31 nicht koaxial mit dem horizontal verlaufenden Abschnitt der Unterkante 14 verläuft, sondern schräg dazu. Das Ende der Unterkante 14 bzw. des Spannseils 31 befindet sich also nicht auf der horizontalen Längsachse der Unterkante 14, sondern neben, insbesondere über dieser Längsachse. Das selbe gilt für die Befestigung des anderen Endes des Spannseils 31 bzw. der Unterkante 14, wie in Fig. 8 dargestellt. Dort ist gut zu erkennen, dass das Spannseil 31 aus der Öffnung 23 der Ausnehmung 20 schräg nach oben herausgeführt und mit einer Aufnahmewelle 38 verbunden ist. Die Spannkraft wird durch eine Betätigung des Ratschengetriebes 36 und die damit verbundene Drehung der Drehwelle 27 erzeugt. Aufgrund der schräg verlaufenden Enden des Spannseiles 31 wird eine in vertikaler Richtung wirkende Kraftkomponente auf die Klemmvorrichtung 15, insbesondere das Rohr 18 ausgeübt.

Um zu vermeiden, dass das Spannseil 31 beim Aufwickeln zu sehr aufträgt, ist der Wickelaufsatz 39 mit einer spiralförmigen Nut 28 versehen, so dass sich das Spannseil 31 entlang der Drehwelle 27 bzw. des Wickclaufsatzes 39 beim Aufwickeln verteilt.

Die Erfindung ist nicht auf das vorstehend beschriebene Rohrprofil als Klemmmitel beschränkt. Vielmehr sind auch andere Konstruktionen möglich, die ein Festklemmen, insbesondere ein linienförmiges Festklemmen der Plane 11 ermöglichen. Beispielsweise könnte anstelle der drehbeweglichen Rohraußenkante 16a eine schwenkbewegliche Kante in Form einer Klappe vorgesehen sein, die die Unterkante 14 der Plane 11 hintergreift. Weiterhin denkbar ist die Kombination zweier Schwenkkanten bzw. Schwenkklappen, die so gegeneinander verstellbar sind, dass eine Scherbewegung der Klappen erfolgt, zwischen denen die Plane festgeklemmt wird. Ebenfalls ist die Kombination einer Schwenkklappe mit einer ortsfesten Kante möglich.

Ein drittes Ausführungsbeispiel zur Realisierung der erfindungsgemäßen Befestigungsvorrichtung ist in Fig. 9 dargestellt.

Dabei weist das Klemmmittel 15 mehrere fahnenartige Fortsätze 29 auf, die beweglich, insbesondere schwenkbeweglich angeordnet sind. Dazu sind die fahnenartigen Fortsätze 29 in der Form mehrerer Finger entlang einer Schwenk- bzw. Drehwelle 40 angeordnet. Eine entsprechende Anzahl von Öffnungen 30 ist in der Plane an der Unterseite, also angrenzend zur Unterkante 14 vorgesehen. Die Öffnungen 30 sind dabei so bemessen, dass die Fortsätze 29 diese durchgreifen können. Das Spannseil 31 schließt die Öffnungen 30 nach unten hin ab, so dass beim Eingreifen der fahnenartigen Fortsätze 29 das Spannseil 31 bzw. die Unterkante 14 der Plane 11 übergriffen wird. Durch eine Schwenkbewegung der Welle 40 werden die Fortsätze 29 nach unten bewegt und nehmen das Spannseil 31 mit, so dass das Spannseil 31 unter den Fortsätzen 29 eingeklemmt wird.

Bei diesem Ausführungsbeispiel wird der Wirkung nach ebenfalls ein linienförmiges Festklemmen der Unterkante 14 bzw. des Spannseiles 31 bewirkt, wobei die Klemmmittel, d. h. die Fortsätze 29 sich nicht durchgehend über die gesamte Länge des Anhängers erstrecken, sondern abschnittsweise vorgesehen sind.

Die vorstehend erläuterten Befestigungsvorrichtungen können zusammen mit einer Planenstraffeinrichtung verwendet werden, bei der teleskopierbare Rungen zum Straffen der Plane um wenige Zentimeter nach oben pneumatisch ausgefahren werden.

Die erfindungsgemäße Befestigungsvorrichtung eignet sich besonders gut zum Einsatz in Nutzfahrzeuganhängern, insbesondere Sattelaufliegern, die ein aus einem Kohlenstoff-Faser-Verbundwerkstoff (Carbon Fibre Composite: CFK) hergestelltes Fahrgestell aufweisen.

Die Anordnung des Profilrohres 18 im Rahmen 21, d. h. in der Ausnehmung 20, ist unter acrodynamischen Gesichtspunkten besonders günstig, was zu einem verringerten Kraftstoffverbrauch beiträgt. Außerdem ist die Befestigungsvorrichtung im Vergleich zu den bekannten Punktbefestigungen einfach zu montieren und zu bedienen, so dass zusätzlich zu den aerodynamischen Vorteilen noch niedtige Herstellungskosten sowie eine Zeitersparnis bei der Bedienung und Handhabung hinzukommen.

### Bezugszeichenliste

- 10: Befestigungsvorrichtung
- 11: Plane
- 12: Nutzfahrzeuganhänger
- 13: Verbindungseinrichtung
- 14: Unterkante
- 15: Klemmmittel
- 16: Rohrkante
- 16a: Rohraußenkante
- 17: Kante
- 18: Rohr
- 19: Kante
- 20: Ausnehmung
- 21: Rahmen
- 22: Lagerbereich
- 23: Öffnung
- 24a, 24b: Wölbung
- 25: Arretiereinrichtung
- 26: Spannmittel
- 27: Drehwelle
- 28: Nut
- 29: Fortsätze
- 30: Öffnungen
- 31: Seil
- 32: Seitenteil
- 33: Multifunktionsschiene
- 34: Chassisboden
- 35: Waben
- 36: Ratschengetriebe
- 37: Eckrunge
- 38: Aufnahmewelle
- 39: Wickelaufsatz
- 40: Drehwelle

## Patentansprüche

1. Befestigungsvorrichtung (10) für die Plane (11), insbesondere die Schiebeplane eines Nutzfahrzeugs bzw. eines Nutzfahrzeuganhängers (12) mit einer Einrichtung (13) zum Verbinden einer Unterkante (14) der Plane (11) mit dem Nutzfahrzeug bzw. dem Nutzfahrzeuganhänger (12),
**dadurch gekennzeichnet, dass**
die Verbindungseinrichtung (13) ein Mittel (15) zum Festklemmen der Unterkante (14) der Plane (11) am Nutzfahrzeug bzw. am Nutzfahrzeuganhänger (12) umfasst.

2. Befestigungsvorrichtung nach Anspruch 1
**dadurch gekennzeichnet, dass**
das Klemmmittel (15) eine beweglich gelagerte, in eine Offenstellung und eine Befestigungsstellung verstellbare Kante (16) umfasst, die parallel zur Unterkante (14) der Plane (11) angeordnet ist und diese in der Befestigungsstellung festklemmt.

3. Befestigungsvorrichtung nach Anspruch 2,
**dadurch gekennzeichnet, dass**
das Klemmmittel (15) eine weitere, insbesondere ortsfeste Kante (17) aufweist, die parallel zur Unterkante (14) der Plane (11) angeordnet ist, wobei die beiden Kanten (16, 17) zum Festklemmen der Unterkante (14) der Plane (11) relativ zueinander verstellbar sind.

4. Befestigungsvorrichtung nach wenigstens einem der Ansprüche 1-3,
**dadurch gekennzeichnet, dass**
das Klemmmittel (15) ein in Längsrichtung geschlitztes Rohr (18) und eine dem Rohr (18) zugeordnete Kante (19) am Nutzfahrzeug bzw. Nutzfahrzeuganhänger (12) umfasst, wobei das Rohr (18) und die Kante (19) relativ zueinander dreh- bzw. schwenkverstellbar angeordnet sind.

5. Befestigungsvorrichtung nach Anspruch 4,
**dadurch gekennzeichnet, dass**
das Rohr (18) drehbeweglich in einer Ausnehmung (20) angeordnet ist, die in einem Rahmen (21) des Nutzfahrzeugs bzw. Nutzfahrzeuganhängers (12) ausgebildet ist und sich parallel zur Unterkante (14) der Plane (11) erstreckt, wobei die Ausnehmung (20) die dem Rohr (18) zugeordnete Kante (19) aufweist.

6. Befestigungsvorrichtung nach Anspruch 5.
**dadurch gekennzeichnet, dass**
die Ausnehmung (20) einen Lagerbereich (22) zur drehbeweglichen Aufnahme des Rohrs (18) aufweist, sowie eine mit dem Lagerbereich (22) verbundene Öffnung (23), an der die Kante (19) ausgebildet ist.

7. Befestigungsvorrichtung nach Anspruch 5 oder 6,
**dadurch gekennzeichnet, dass**
das Rohr (18) in der Ausnehmung (20), insbesondere im Lagerbereich (22) radial beweglich gelagert und in eine Offenstellung sowie in eine Befestigungsstellung bewegbar ist, wobei das Rohr (18) in der Befestigungsstellung arretierbar ist.

8. Befestigungsvorrichtung nach Anspruch 6 oder 7,
**dadurch gekennzeichnet, dass**
der Lagerbereich (22) eine erste, dem Umfangsprofil des Rohres (18) teilweise angepasste Wölbung (24a) und eine zweite, dem Umfangsprofil des Rohres (18) teilweise angepasste Wölbung (24b) aufweist, wobei die beiden Wölbungen (24a, 24b) voneinander beabstandet sind derart, dass das Rohr (18) zum Arretieren von der ersten in die zweite Wölbung (24a, 24b) bewegbar ist.

9. Befestigungsvorrichtung nach Anspruch 5 oder 6,
**dadurch gekennzeichnet, dass**
das Rohr (18) in der Ausnehmung (20), insbesondere im Lagerbereich (22) radial gelagert ist.

10. Befestigungsvorrichtung nach wenigstens einem der Ansprüche 1-9,
**dadurch gekennzeichnet, dass**
eine Einrichtung (25) zum Arretieren des Klemmmittels (15) in der Befestigungsstellung vorgesehen ist, wobei die Arretiereinrichtung (25) ein Mittel (26) zum Spannen der Unterkante (14) der Plane (11) umfasst, das die Unterkante (14) der Plane (11) in der Befestigungsstellung mit einer Spannkraft beaufschlagt, die eine Komponente senkrecht zur Unterkante (14) der Plane (11) aufweist.

11. Befestigungsvorrichtung nach Anspruch 10,
**dadurch gekennzeichnet, dass**
das Spannmittel (26) eine im Wesentlichen senkrecht angeordnete Drehwelle (27) umfasst, wobei ein Ende der Unterkante (14) der Plane (11) an der Drehwelle (27) und das andere Ende ortsfest am Nutzfahrzeug oder am Nutzfahrzeuganhänger (12) befestigbar ist derart, dass wenigstens ein Ende, insbesondere beide Enden nicht koaxial mit dem horizontal verlaufenden Abschnitt der Unterkante (14) der Plane (11) angeordnet ist.

12. Befestigungsvorrichtung nach Anspruch 11,
**dadurch gekennzeichnet, dass**
die Drehwelle (27) eine spiralförmige Nut (28) aufweist zum Aufwickeln der Unterkante (14) der Plane (11).

13. Befestigungsvorrichtung nach Anspruch 1 oder 2,
**dadurch gekennzeichnet, dass**
das Klemmmittel (15) mehrere fahnenartige Fortsätze (29) aufweist, die beweglich, insbesondere schwenkbeweglich, angeordnet sind und in der Befestigungsstellung in passende Öffnungen (30) in der Plane (11) eingreifen, die bodenseitig von der Unterkante (14) der Plane (11) begrenzt sind.

14. Befestigungsvorrichtung nach wenigstens einem der Ansprüche 1 - 13,
**dadurch gekennzeichnet, dass**
die Unterkante (14) der Plane (11) verstärkt ist.

15. Befestigungsvorrichtung nach wenigstens einem der Ansprüche 1 - 14,
**dadurch gekennzeichnet, dass**
die Unterkante (14) mit einem Seil (31), insbesondere mit einem thermisch dimensionsstabilen Stahlseil, verbunden ist.

16. Nutzfahrzeug mit einer Befestigungsvorrichtung nach wenigstens einem der Ansprüche 1-15, wobei ein Rahmen (21) des Nutzfahrzeugs aus einem Kohlenstoff-Faser-Verbundwerkstoff hergestellt ist.

17. Nutzfahrzeuganhänger (12) mit einer Befestigungsvorrichtung nach wenigstens einem der Ansprüche 1-15, wobei ein Rahmen (21) des Nutzfahrzeuganhängers aus einem Kohlenstoff-Faser-Verbundwerkstoff hergestellt ist.
